# FASCICULE DE BREVET EUROPEEN

(11) **EP 2 453 752 B1**
(45) Date de publication et mention de la délivrance du brevet: **12.10.2016**
(21) Numéro de dépôt: 10732970.8
(22) Date de dépôt: 15.07.2010
(51) Int. Cl.: A21B 2/00, F24C 15/34, H05B 3/00

(54) **FOUR DE CUISSON À USAGE ALIMENTAIRE ET PROCÉDÉ DE CUISSON D'UNE PÂTE À BASE DE CÉRÉALES**
NAHRUNGSMITTELSBACKOFEN UND VERFAHREN ZUM KOCHEN EINEM GETREIDE BASIERTEN TEIG
COOKING OVEN FOR FOOD USE AND COOKING PROCESS OF A CEREAL-BASED DOUGH

(30) Priorité: 16.07.2009 FR 0954944
(43) Date de publication de la demande: 23.05.2012
(73) Titulaire: Centre National de la Recherche Scientifique (CNRS), 75016 Paris (FR)
(72) Inventeur: LE BAIL, Alain, F-44300 Nantes (FR); JURY, Vanessa, F-44700 Orvault (FR); DESSEV, Tzvetelin, 4000 plovdiv (BG)
(74) Mandataire: Regimbeau
(86) Numéro de dépôt international: PCT/EP2010/060195
(87) Numéro de publication internationale: WO 2011/006955

(56) Documents cités:
- WO-A1-80/02224
- WO-A1-99/05457
- WO-A2-99/53251
- FR-A- 542 241
- FR-A1- 2 636 410
- FR-A1- 2 863 711
- GB-A- 707 827
- GB-A- 2 203 020
- GB-A- 2 231 653
- US-A- 2 767 297
- US-A1- 2006 081 135

## Description

La présente invention est relative à un four de cuisson à usage alimentaire, pour la cuisson d'une pâte à base de céréales, notamment une pâte fermentée, telle qu'une pâte à pain.

Elle concerne également un procédé de cuisson d'une pâte alimentaire à base de céréales.

Il est bien connu que la cuisson de produits céréaliers, tels que de la pâte à pain, consomme beaucoup d'énergie.

Ainsi, la cuisson de pain requiert environ 2 à 5 Mjoules par kilogramme de pain à cuire, selon les sources bibliographiques.

A titre indicatif, cette énergie est deux à trois fois supérieure celle requise pour la même masse d'un produit alimentaire sous forme de conserve.

Une méthode traditionnelle de cuisson de pain fait usage d'un four électrique pourvu d'une sole. Une sole est une pierre réfractaire disposée dans la partie basse d'un four et destinée à recevoir les pains en cours de cuisson.

Ce four est constitué d'une enceinte isolée thermiquement qui comporte une sole en matériau réfractaire sur laquelle la pâte céréalière est déposée sous forme de pâtons, en vue de l'élaboration de pains.

Un tel four est le plus souvent équipé de résistances électriques placées dans l'enceinte, à proximité de sa voute.

Par ailleurs, ce four est pourvu de résistances additionnelles qui sont placées sous la sole et qui ont pour fonction d'en réaliser le préchauffage. Ces résistances sont donc placées entre la sole et une paroi formant la base du four.

En effet, l'énergie stockée par le matériau réfractaire constitutif de la sole (pierre, ciment spécial, etc.) contribue très largement à la cuisson de la pâte.

Cette méthode donne généralement satisfaction mais il est clair qu'une bonne partie de l'énergie électrique délivrée est gaspillée et notamment absorbée par les parois de l'enceinte qui constituent le four, sans contribuer positivement à la cuisson de la pâte. Ceci est particulièrement vrai en ce qui concerne les résistances électriques placées sous la sole, dont une partie de l'énergie émise est absorbée par la paroi du four.

Par ailleurs, il est connu qu'une grande partie de la demande en énergie pour la cuisson de pain est requise durant la phase de préchauffage du four, c'est-à-dire avant que les pâtons ne soient déposés à l'intérieur du four.

Ultérieurement, pendant la cuisson, la demande en énergie est moindre car la température requise pour la levée de la pâte est inférieure ou égale à la température du four à l'issue de ce préchauffage.

Avec la méthode traditionnelle décrite plus haut, on comprend aisément qu'une perte d'énergie a lieu au cours du processus.

On décrit dans le FR 2 636 410 un four à usage domestique dans lequel on se propose de résoudre le problème de l'amélioration du nettoyage des parois de la cavité interne du four. Ceci est résolu par le fait qu'on utilise un matériau à coefficient de dilatation thermique voisin de zéro. Comme précisé dans ce document, le four comporte un tableau de commande et de régulation, de éléments de chauffe tant au niveau de la sole que du grill associé au plafond, ainsi que d'autres éléments conventionnels divers.

Dans le GB 2 281 653 est prévu un four dépourvu de sole. Ses moyens de chauffage, qui consistent en des lampes, sont disposés en partie supérieure de la cavité du four, mais également au niveau de ses parois latérales.

Le document WO 99/05457 est également pertinent par rapport à l'objet de l'invention. La présente invention a pour but de pallier les inconvénients cités plus haut en fournissant un four de cuisson à usage alimentaire, pour la cuisson d'une pâte à base de céréales, qui autorise une économie d'énergie notable, tout en permettant une cuisson de la pâte d'une manière tout à fait satisfaisante.

La présente invention vise aussi à fournir un procédé de cuisson d'une pâte alimentaire permettant également d'atteindre ces objectifs d'économie d'énergie.

Ainsi, selon un premier aspect de l'invention, celle-ci concerne un four de cuisson à usage alimentaire, pour la cuisson d'une pâte à base de céréales, notamment une pâte fermentée, qui comprend une enceinte isolée thermiquement dont la base est constituée d'une sole en matériau réfractaire, et qui renferme des moyens de chauffage de la sole et de ladite enceinte.

Selon l'invention, lesdits moyens de chauffage consistent en des moyens émettant de l'énergie majoritairement sous la forme d'un rayonnement électromagnétique dans un domaine de l'infrarouge, disposés dans la partie supérieure de l'enceinte et orientés en direction de la sole, et en ce qu'il est dépourvu de tout autre moyen de chauffage de ladite sole.

En d'autres termes, la sole n'est pas pourvue de moyens de chauffage de proximité. Comme on le verra plus loin, les seuls moyens de chauffage, qui consistent préférentiellement en des lampes, vont permettre de réaliser le préchauffage de la sole, puis le chauffage de la partie supérieure des pâtons pendant la cuisson. Ces lampes comportent un filament porté à haute température, qui émet de l'énergie sous la forme d'un rayonnement électromagnétique dont la longueur d'onde couvre une part importante du spectre des longueurs d'onde visibles pour l'oeil humain. Pour la partie non visible de ce spectre, on parle alors de rayonnement ou d'énergie de type infrarouge court ou moyen.

Grâce à cet agencement, on s'est donc rendu compte qu'il est possible de réaliser une cuisson d'une pâte, par exemple pour l'obtention de pain, en faisant de grandes économies d'énergie, tout en obtenant un produit cuit tout à fait satisfaisant, dont les caractéristiques sont analogues à celles d'un pain cuit dans un four traditionnel équipé de deux systèmes de chauffage (sole et voute).

Selon d'autres caractéristiques avantageuses de ce four :
- lesdits moyens de chauffage consistent en des lampes ;
- il comprend des moyens de contrôle de la puissance desdits moyens de chauffage ;
- lesdits moyens de contrôle de puissance comprennent au moins un capteur de température placé dans ladite sole ;
- il comporte au moins deux capteurs, et ces capteurs occupent chacun, en considérant l'épaisseur de ladite sole, une position différente par rapport à la surface supérieure de celle-ci ;
- il comporte des moyens pour moduler la puissance des moyens de chauffage;
- lesdits moyens sont aptes à réduire, respectivement à augmenter la puissance de l'ensemble des moyens de chauffage;
- lesdits moyens sont aptes, afin de réduire la puissance des moyens de chauffage, à provoquer l'allumage/l'extinction alternée d'une première partie des moyens de chauffage, en synchronisme avec l'extinction/l'allumage d'une seconde partie des moyens de chauffage;
- à pleine puissance, lesdits moyens de chauffage émettent une radiation de longueur d'onde dans le domaine de l'infrarouge court (0,8 à 2 µm) ou de l'infrarouge moyen (2 à 4 µm);
- la sole présente une teinte sombre apte à favoriser l'absorption des rayonnements infrarouges proches de la longueur d'onde du domaine visible (infra rouge court) ;
- il comporte des moyens de génération de vapeur, d'injection contrôlée dans ladite enceinte et, éventuellement, de récupération de vapeur non absorbée ;
- ce four est équipé d'un système de mesure de la puissance électrique consommée par chaque lampe individuellement afin de détecter si une lampe présente une anomalie de fonctionnement et doit être remplacée ;
- les connexions électriques desdites lampes se trouvent à l'extérieur de l'enceinte ;
- lesdits moyens de chauffage consistent en des brûleurs équipés d'une mousse métallique ou de céramique réfractaire, et alimenté par un combustible gazeux tel que du gaz naturel ou du gaz de pétrole liquéfié.

Comme indiqué plus haut, la présente invention se rapporte également à un procédé de cuisson d'une pâte alimentaire à base de céréales, notamment d'une pâte fermentée, dans un four qui comprend une enceinte isolée thermiquement, dont la base est constituée d'une sole en matériau réfractaire et qui renferme des moyens de chauffage de la sole et de ladite enceinte, qui consistent en un ensemble de moyens de chauffage, tels que des lampes, émettant dans l'infrarouge, disposés dans la partie supérieure de l'enceinte et orientés en direction de la sole, à l'exclusion de tout autre moyen de chauffage de ladite sole.

caractérisé par le fait qu'il consiste à mettre en oeuvre les étapes suivantes:
a/ préchauffer le four, à vide, à l'aide desdits moyens de chauffage ;
b/ introduire ladite pâte dans ce four en la faisant reposer sur la sole ;
c/ réduire ou amener à zéro la puissance desdits moyens de chauffage et poursuivre la cuisson jusqu'à obtention du degré et/ou de la durée de cuisson désiré(s) ;
d) pendant la phase de cuisson, introduire éventuellement une certaine quantité de vapeur d'eau afin de favoriser l'expansion du pain au moment de la cuisson (expansion de la pâte fermentée au four).

Dans certains modes de fonctionnement, il est donc envisageable de procéder à la cuisson avec une puissance desdits moyens de chauffage égale à zéro (puissance nulle) en apportant la chaleur nécessaire à la cuisson uniquement avec l'énergie stockée dans la sole.

Selon des modes de réalisations particuliers de ce procédé :
- on mesure la durée de la cuisson désirée, à partir de la mesure d'une sonde de température disposée dans la pâte ou dans la sole, ou par un moyen thermométrique mesurant à distance la température de surface de la pâte en cours de cuisson par rayonnement infrarouge ;
- on mesure la durée de préchauffage du four à partir de la mesure d'une sonde de température disposée dans la sole, d'un moyen thermométrique communiquant à distance par rayonnement infrarouge (thermomètre infrarouge sans contact) et permettant de mesurer la température de la face supérieure ou inférieure de la sole à distance, ou d'un fluxmètre installé dans la sole ;
- à l'étape c/, on réduit la puissance de l'ensemble des lampes ;
- à l'étape c/, on provoque l'allumage/l'extinction alternée d'une première partie des lampes, en synchronisme avec l'extinction/l'allumage d'une seconde partie des lampes ;
- on contrôle la fin de cuisson par des moyens vidéo aptes à apprécier le degré de coloration de la croûte des pâtons, pour agir sur la puissance desdits moyens de chauffage et décider de la fin de cuisson ;
- le ratio entre l'énergie restituée par la sole pendant la cuisson et l'énergie demandée pour la cuisson des pâtons est compris entre 2 et 3 environ, sans prendre en compte l'énergie liée à l'évaporation de l'eau (séchage de la croûte).

D'autres caractéristiques et avantages de la présente invention apparaîtront à la lecture de la description détaillée qui va suivre d'un mode de réalisation particulier.

Cette description sera faite en référence aux dessins annexés dans lesquels :
La figure 1 est une vue schématique d'un four conforme à l'invention, selon un plan de coupe transversal et vertical.
Les figures 2 à 4 sont des vues très schématiques de ce four, destinées à illustrer les étapes de préchauffage du four et de cuisson de pâtons.
Les figures 5 à 7 sont des courbes évaluant différents paramètres de cuisson en fonction du temps, avec un four selon l'invention et un four de contrôle conventionnel.
Les figures 8 à 10 sont des graphiques donnant les différents résultats de test de cuisson selon l'invention et avec un four de référence.

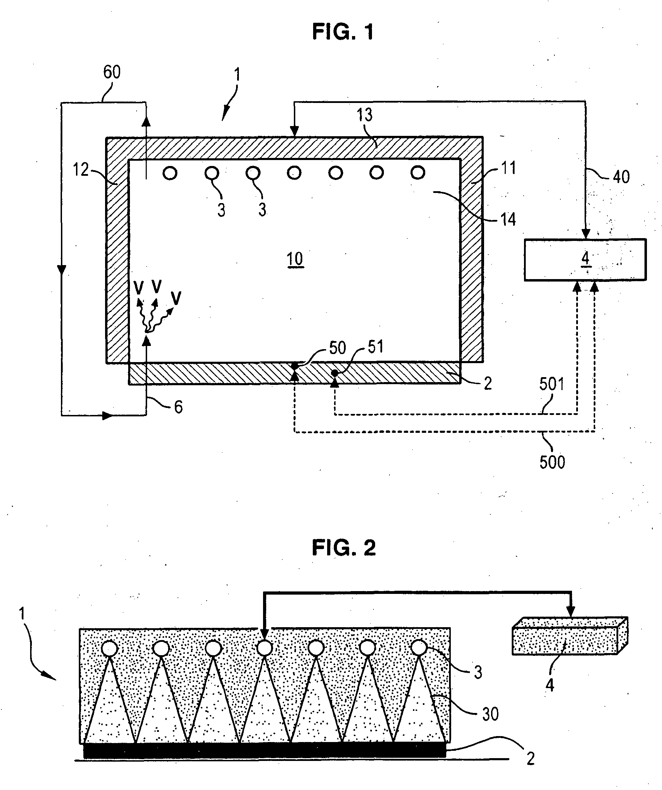

Le four selon l'invention, tel qu'il est représenté à la figure 1 annexée, a une structure généralement connue en soi.

Il est constitué d'une enceinte 10 isolée thermiquement, qui est délimitée latéralement par des parois 11, 12 et 14 et, en son sommet, par une voûte 13.

L'ensemble de ces parois est réalisée en un matériau métallique qui permet de contenir l'humidité du four, avec une isolation thermique disposée extérieurement, ou encore en matériau réfractaire, tel que de la brique.

Sa base est constituée d'une sole 2 également en matériau réfractaire, par exemple d'une épaisseur d'environ 2 cm.

Dans un mode de réalisation préféré, la surface supérieure de la sole présente une couleur sombre de manière à absorber un maximum de radiations émises lors du chauffage du four.

Le four 1 est pourvu de moyens dé chauffage de la sole et de l'enceinte 10.

Ces moyens de chauffage émettent de l'énergie majoritairement sous la forme d'un rayonnement électromagnétique. Ils consistent en un ensemble de lampes 3 qui émettent dans l'infrarouge et qui sont disposées en partie supérieure de l'enceinte 10 Elles s'étendent à proximité de la voûte 13 et sont orientées en direction de la sole 2.

A titre indicatif, pour une surface de voûte d'un mètre carré, on fait usage de 8 à 12 lampes régulièrement réparties. On utilise par exemple des lampes qui présentent chacune une puissance maximale de 2500 W.

Dans un mode préférentiel de réalisation, ces lampes à infrarouge émettent une radiation dont la longueur d'onde est égale à environ 1 µm à 1,5 µm lorsqu'elles sont utilisées à pleine puissance.

On notera, que conformément à l'invention, ces moyens de chauffage constitués par les lampes sont les seuls utilisés dans le four, ce qui signifie que celui-ci est dépourvu de tout autre moyen de chauffage de la sole 2.

En quelque sorte, ces lampes contribuent seulement à chauffer l'espace interne du four et non ses parois.

Ce four est, dans un mode de réalisation préféré, pourvu de moyens de contrôle 4 de la puissance des lampes.

Ils sont reliés aux lampes par tout moyen connu de l'homme du métier (liaison filaire ou autres) et référencés 40 à la figure 1.

Ils intègrent notamment des moyens informatiques.

Ces moyens de contrôle comprennent également au moins un capteur de température placé dans la sole 2.

Dans l'exemple représenté ici, on a affaire à deux capteurs 50 et 51 connectés aux moyens de contrôle 4 par une liaison référencée 500, respectivement 501.

Le capteur 50 est placé "à fleur" de la surface supérieure de la sole, tandis que le capteur 51 est placé "à coeur". En d'autres termes, le capteur 50 affleure pratiquement à la surface supérieure, tandis que le capteur 51 occupe une position intermédiaire (ou éventuellement en surface inférieure de la sole), dans le sens de l'épaisseur de la sole.

Ainsi répartis, le capteur 50 enregistre le flux thermique reçu par la sole en surface, tandis que le capteur 51 renseigne de la température de la sole en profondeur.

Par ailleurs, les moyens 4 sont aptes, quand cela est souhaité; à moduler la puissance des lampes 3. Ainsi, si l'on souhaite réduire la puissance de ces lampes, ces moyens peuvent piloter la réduction de la puissance de l'ensemble des lampes.

Toutefois, pour atteindre le même but, et dans un mode de réalisation différent, les moyens 4 sont aptes à provoquer l'allumage et l'extinction alternés d'une première partie des lampes 3, en synchronisme avec l'extinction et l'allumage d'une seconde partie de ces lampes.

Préférentiellement, les lampes des premières et secondes parties sont judicieusement réparties sur la surface totale du four, de manière à ce qu'une "insolation globalement uniforme" de la sole soit obtenue, quel que soit le groupe de lampes qui est allumé.

Egalement de manière préférentielle, un système de mesure de la puissance consommée par les lampes (tel qu'un ampèremètre ou un wattmètre) est installé dans l'armoire de commande afin de détecter si une lampe présente une anomalie de fonctionnement et doit être remplacée.

Enfin, on a référencé 6 des moyens de génération et d'injection contrôlée de vapeur dans l'enceinte 10.

Sur la figure, cette vapeur est symbolisée V.

On notera que ces moyens comprennent également une tubulure 60 de récupération de la vapeur non absorbée au sein du four et de retour vers lesdits moyens de génération 6.

Comme indiqué plus haut, la présente invention concerne également un procédé de cuisson d'une pâte alimentaire à base de céréales, notamment une pâte à pain fermentée.

Dans une première étape, ce procédé consiste à réchauffer le four 1, à vide, à l'aide des moyens de chauffage 3.

Ceci est représenté à la figure 2 annexée dans laquelle la référence 30 représente schématiquement le rayonnement émis par chacune des lampes.

Préférentiellement, cette étape est mise en oeuvre à pleine puissance des lampes, avec une radiation de longueur d'onde de l'ordre de 1 à 1,5 µm.

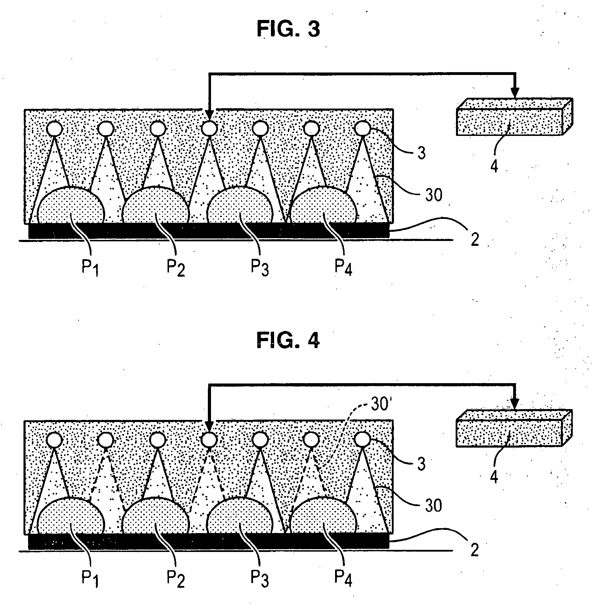

Lorsque la température de préchauffage est atteinte, cette information étant par exemple donnée par le capteur 51 précité, on enfourne alors la pâte dans le four, de préférence sous forme de pâtons P₁ à P₄, comme le montre la figure 3.

On peut alors procéder à la réduction de la puissance de l'ensemble des lampes 3, pendant cette phase de cuisson des pâtons. A titre indicatif, la puissance des lampes est alors de 10 à 20% de leur puissance nominale. Dans certains modes de fonctionnement la puissance des lampes peut également être réduite à 0%, en particulier pour la cuisson partielle de pains pour lesquels on ne souhaite pas colorer la croûte.

Dans une alternative représentée à la figure 4, cette réduction de puissance se fait, non pas en réduisant la puissance de l'ensemble des lampes 3, mais en procédant à un allumage et à une extinction alternée d'une partie des lampes 3, en synchronisme avec l'extinction et l'allumage d'une seconde partie des lampes. Ainsi, préférentiellement, le nombre de lampes est pair.

Conjointement à la phase de cuisson décrite précédemment, une injection de vapeur peut avoir lieu de manière continue ou de manière ponctuelle. Dans des conditions standard, une injection est faite au début de la cuisson. Cependant, une injection peut être également poursuivie en cours de cuisson avec, pour objectif, de retarder la coloration de la croûte du pain. Cela peut aussi avoir pour effet de réduire la quantité de composés néoformés tels que les acrylamides (substances cancérigènes).

Des essais comparatifs ont été réalisés à partir de deux fours de dimensions équivalentes et de même construction.

Un four (de contrôle) de marque MIWE - Germany (MIWE - CO11208) a été utilisé comme base de comparaison.

Ce four de contrôle était équipé d'un chauffage individualisé pour la voûte et pour la sole, avec une sole en ciment réfractaire d'épaisseur 20 mm (densité 2200 kg/m3, chaleur spécifique 1.1J/g/K, conductivité 1.03 W/m/K).

Les dimensions internes du four étaient les suivantes : Profondeur x largeur x hauteur : 850x1240x240 mm. Le volume du four était donc de 0.25 m³, avec une surface effective de cuisson de 1.05 m².

Un four prototype (four IR) utilisant la même base a été mis au point en utilisant des lampes à infra rouge comme seul mode de chauffage.

Pour ce four, aucune alimentation électrique ni chauffage n'était installé en partie basse (sole). Douze lampes infra rouges produites par la société HERAEUS (Heraeus-Allemagne référence 80047927) étaient positionnées en partie supérieure du four (espacement entre lampes : 60 mm ; diamètre des lampes : 10 mm).

Le mode de fonctionnement nominal assurait une puissance de 2500 W par lampe. La température nominale du filament était de 1850 K, correspondant à un pic de puissance émise sur la longueur d'onde de 1,5 µm.

La puissance totale disponible était donc de 30 kW environ pour ce four IR alors qu'elle était de 7,5 à 8 kW environ pour le four de contrôle. On ne parle ici que de la puissance relative au système de chauffage et au système de régulation, ce dernier consommant une puissance négligeable. Pour les deux fours utilisés, le même système de production de vapeur a été utilisé (environ 3 kW).

Un régulateur de puissance était utilisé pour le contrôle de la puissance des lampes IR.

La distance séparant les lampes de la sole était d'environ 200mm.

Les pains qui ont été utilisés ont été obtenus avec la recette suivante : farine type 55 (provenant de la société Moulins Soufflet Pantin - Pornic - teneur en cendres 0,53, teneur en protéines : 10,58 % sur matière sèche, temps de chute 402 s, Indice Zeleny 38, paramètres selon l'alvéographe de Chopin : W = 183, Pm/L = 0,62).

La recette utilisait pour 100g de farine, 58 g d'eau, 3 g de levure (provenant de la société Michard SAS - Theix, France), 1,8 g de sel (provenant de la société Esco, Levallois Perret, France S.A.) et 1 g d'améliorant (provenant de la société PURATOS - Groot Bijgaarden - Belgium).

La pâte a été pétrie dans un pétrin (référence commerciale SP10 pétrin spirale - de la société VMI, Montaigu, France) pendant 3 mn à vitesse de rotation 100 tours/mn suivi de 6 minutes à 200 tours/mn.

A la fin du pétrissage, la température de la pâte était de 20 à 25°C.

La pâte était mise au repos pendant 10 minutes, puis elle était divisée et boulée (pâtons de 70 g) dans une diviseuse bouleuse (de la société Bongard, Holtzheim, France).

Les pâtons de 70 g étaient ensuite installés sur des plateaux en aluminium (masse 670 g, dimensions 40 cm x 80 cm). Douze pains étaient installés sur chaque plateau. Les pâtons de 70g étaient percés de 5 trous avec une aiguille afin d'assurer une pousse - fermentation convenable.

La fermentation se faisait dans une enceinte spéciale (société Panimatic, Souppes s/ Loing, France) pendant 60 min, à une température de 30 °C et 95 % d'humidité relative.

Le taux d'expansion de la pâte était de 3,6 environ par rapport au volume initial de la pâte.

Le procédé de cuisson type "pain précuit" (PP) était réalisé à 200°C. Pendant les 30 premières secondes après enfournement, une injection de vapeur de 100 ml était réalisée, puis la consigne de température était abaissée à 170°C pendant 16 min et 30 s pour la cuisson dans le four conventionnel.

Les pains ainsi obtenus étaient cuits, mais la croûte n'était pas colorée. Les pains étaient refroidis pendant 30 min à température ambiante, puis étaient congelés dans un surgélateur (-30°C pendant 35 min), placés dans un sac plastique et stockés à -18°C.

Pour la seconde cuisson, les pains étaient décongelés pendant 10 min à température ambiante. La seconde cuisson a eu lieu à 240°C. Pendant les 4 premières minutes de cuisson, une injection de vapeur était réalisée (300 ml), avec la cheminée fermée puis, pendant les 4 minutes suivantes, la cheminée était ouverte (durée totale de cuisson 8 min).

Pour les essais, un taux d'occupation maximal était mis en oeuvre avec 3.4kg de pâte pour une surface de four de 1 m² (48 pains de masse initiale 70g).

La phase de préchauffage du four a été réalisée pour le four de contrôle en partant d'un four froid (20°C) et en attendant que la consigne de température soit atteinte.

Pour le "four IR", le préchauffage a été réalisé en utilisant uniquement les lampes IR. Le préchauffage a été réalisé en partant d'un four froid (20°C) et en visant une température de 200°C à atteindre dans la sole. Les lampes IR ont été utilisées à pleine puissance. La température de la sole était mesurée avec six thermocouples placés, en trois endroits différents, le long d'une ligne centrale dans le four.

Une paire de thermocouples était disposée près de la porte du four, une autre paire au milieu du four et une dernière paire au fond du four.

Pour chaque paire de thermocouples, un était placé à environ 1 mm sous la face supérieure de la sole et un autre était placé en contact direct de la face inférieure de la sole.

La phase de préchauffage durait environ 40 min et 9 min avec le four de contrôle et IR respectivement. La durée de cuisson des pains a été déterminée comme le temps nécessaire pour atteindre 98°C au centre du pain, suivi par un palier de 10 min à cette même température. Cette température correspond à la température maximale atteinte par la mie lors d'une cuisson classique (température de palier).

Le temps total de cuisson était de 17 minutes.

Pour certains essais, un capteur de flux était placé dans la partie inférieure du pain qui était en contact avec la sole. Cela avait pour objectif d'évaluer la quantité de chaleur transmise par la sole lors de la cuisson.

Deux thermocouples de type K étaient utilisés pour mesurer la température de la croûte et de la mie en cours de cuisson.

Les pains obtenus ont été analysés en terme de volume, de fermeté de mie, diamètre médian des alvéoles gazeuses, de rapport croûte-mie, de teneur en humidité et de changement de couleur de la croûte ("total color différence").

Les résultats obtenus présentés dans le tableau 1 mettent en évidence que les deux conditions de cuisson (four de référence de contrôle et four IR) conduisent au même résultat : la qualité des pains est tout à fait comparable quelque soit le four utilisé.

La puissance électrique consommée par les fours a également été mesurée à l'aide d'un watt mètre de sensibilité 2 Wh (7,2 kJ). Ce watt mètre mesurait la puissance active.

L'énergie spécifique (ES) en MJ par kg de pâte a été évaluée. Pour la phase de préchauffage, on a mesuré l'énergie nécessaire au préchauffage du four en partant d'un four à une température initiale de 20°C et jusqu'à atteindre la température de consigne souhaitée. Les résultats obtenus sont également présentés dans le tableau 1.

**Tableau 1**

| Résultats expérimentaux pour la première phase de cuisson de pain précuit. | | |
|---|---|---|
| (ES = Energie spécifique en MJ par kg de pâte) | | |
| (Pour la cuisson, la puissance du four IR était à 0%) | | |
| Paramètres | Four utilisé | |
| | Four « IR » | Four de référence de contrôle |
| Durée de préchauffage (min) /énergie (Wh) / ES (Wh.kg⁻¹) | 9/2450/680 | 40/5000/1340 |
| Durée de cuisson (min) /énergie (Wh) / ES (Wh.kg⁻¹) | 17/0/0 | 17/300/83 |
| Durée de réchauffage après cuisson (min)/ énergie (Wh)/ ES (Wh.kg⁻¹) | 2/500/140 | 7/760/211 |
| Volume spécifique des pains (ml/g) | 3,8 | 3,5 |
| Dureté de la mie (force après compression d'une tranche de 20 mm à 40% de sa hauteur - plongeur diamètre 2 cm, adaptation protocole AACC (N) | 0,74 | 0,98 |
| Diamètre médian des cellules gazeuses dans la mie (mm) | 0,78 | 0,78 |
| Rapport croûte/mie - (en considérant le rapport de masse de matière sèche contenue dans la croûte et dans la mie) | 1,1 | 1,12 |
| Teneur en eau de la croûte (en base humide), % Teneur en eau de la mie (en base humide), % | 26,4 44,5 | 26 44 |
| Variation totale de couleur de la croûte | 9 | 8 |
| Perte en eau pendant la cuisson (%) | 13,5 | 14,5 |

Des essais de seconde cuisson de pain précuit ont également été réalisés.

Le protocole a consisté à chauffer le four (température initiale 25°C) jusqu'à la consigne de 240°C. Pour le four IR, les lampes étaient à leur puissance nominale. La durée de la mise en température du four IR était de 12 min. Les pains précuits étaient ensuite mis à cuire (seconde cuisson) dans le four « IR » en réduisant la puissance des lampes à 370W ce qui correspond à une température de filament de 1400 K environ (pic d'émission à la longueur d'onde d'environ 2,1 µm).

Afin d'obtenir une coloration uniforme, les lampes infra rouges étaient allumées de manière alternative. Cette alternance avait lieu toutes les 30 secondes.

Ce mode de fonctionnement a permis d'obtenir une coloration uniforme de la croûte quelque soit l'emplacement du pain dans le four.

Les pains obtenus après seconde cuisson selon ce mode de fabrication ont été analysés et ont été comparés à ceux obtenus avec le four de contrôle (cuisson conventionnelle). Les résultats sont présentés dans le tableau 2, et mettent en évidence que le four IR permet d'obtenir des pains de qualité équivalente.

**Tableau 2**

| Résultats expérimentaux pour la phase de seconde cuisson des pains précuits | | |
|---|---|---|
| Paramètres | Four utilisé | |
| | Four « IR » | Four de référence de contrôle |
| Durée de préchauffage (min) /énergie (Wh) / ES (Wh.kg⁻¹) | 12/3600/1000 | 50/6000/1670 |
| Durée de cuisson (min) /énergie (Wh) / ES (Wh.kg⁻¹) | 8/240/70 | 8/600/170 |
| Durée de réchauffage après cuisson (min)/ énergie (Wh)/ ES (Wh.kg⁻¹) | 3/650/180 | 6/500/140 |
| Volume spécifique des pains (ml/g) | 4,4 | 4,4 |
| Dureté de la mie (force après compression d'une tranche de 20 mm à 40% de sa hauteur - plongeur diamètre 2 cm, adaptation protocole AACC (N) | 0,65 | 0,55 |
| Diamètre médian des cellules gazeuses dans la mie (mm) | 0,8 | 0,83 |
| Rapport croûte/mie (en considérant le rapport de masse de matière sèche contenue dans la croûte et dans la mie) | 1,8 | 1,95 |
| Teneur en eau de la croûte (en base humide), % | 20 | 19 |
| Teneur en eau de la mie (en base humide), % | 42 | 44 |
| Variation totale de couleur de la croûte | 23 | 20 |
| Perte en eau pendant la cuisson (%) | 7 | 6 |

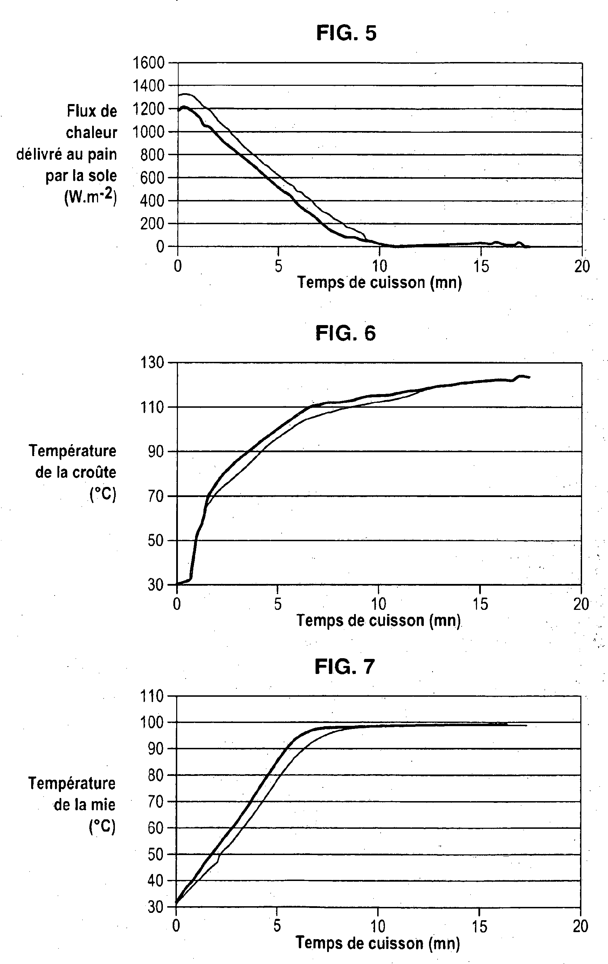

Les courbes de figures 5, 6 et 7 permettent de comparer différents paramètres de cuisson entre le four IR (IR Oven), objet de la présente invention, et le four de contrôle conventionnel équipé de deux chauffages.

Les mesures portent sur la phase de pré cuisson du pain. Les courbes de ces figures présentent respectivement des mesures de flux de chaleur, de température de la croûte et de température de la mie, en fonction du temps. Les courbes en traits gras se rapportent au four de contrôle conventionnel, tandis que les courbes en traits fins se rapportent au four IR selon l'invention.

On note que les écarts observés ne sont pas significatifs, et on peut en conclure qu'une grande similarité existe entre les deux concepts de fours en ce qui concerne la qualité des pains obtenus.

Des essais de comparaison de l'influence de la température de préchauffage du four "infra rouge" selon l'invention ont été réalisés. On a considéré le four de référence avec une température de préchauffage de 230°C et le four "infra rouge" avec une température de préchauffage de la sole de 190°C, 210°C et 230°C.

Lors de la phase de cuisson en four infra rouge, la puissance transmise au four était nulle.

Pour chaque cuisson, 36 pains de 70 g (masse initiale de pâte) étaient installés dans le four avec un mode de préparation de la pâte identique à précédemment. Deux cent millilitres de vapeur étaient injectés dans le four au début de la cuisson. La durée totale de la cuisson était de 18 minutes.

Lors de ces essais, la consommation d'énergie n'a pas été mesurée.

Le volume des pains, le rapport croute/mie (en rapport de masse de matière sèche) et la différence totale de couleur entre la pâte non cuite et le pain cuit ont été mesurés.

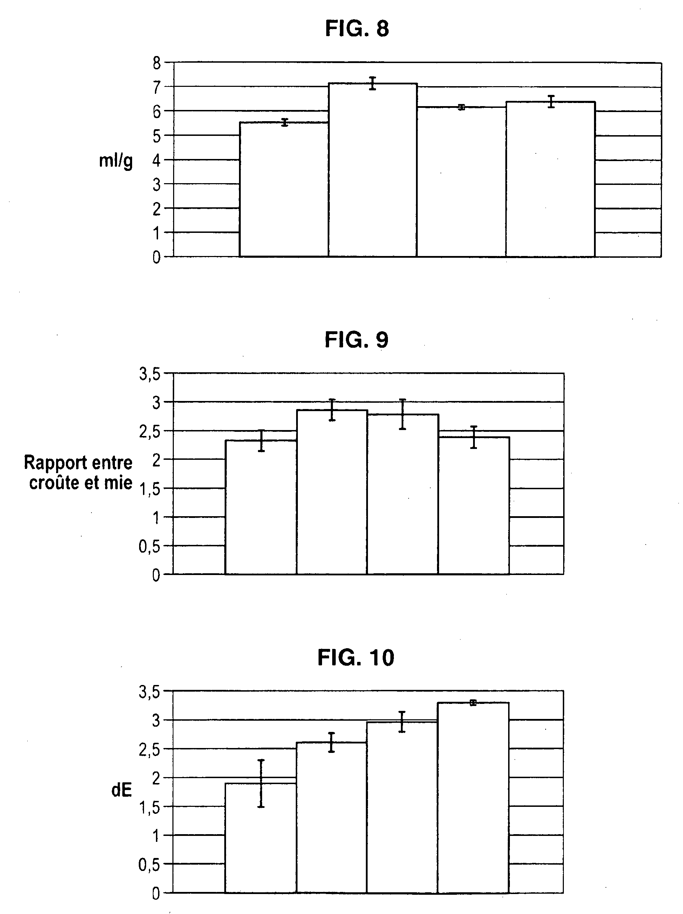

Sur les figures 8, 9 et 10 annexées sont donnés, sous la forme de rectangles, les résultats de tests menés avec le four selon l'invention, avec préchauffage de 190, 200 et 210°C (de gauche à droite) et avec le four de référence (préchauffage à 230°C - à droite).

A la figure 8, sont données les valeurs de volume des pains (en ml/g). A la figure 9, apparaît le rapport croûte/mie, tandis qu'à la figure 10 est représenté le dE (différence de couleur).

On voit sur les figures annexées que le four infra rouge semble donner un volume et un rapport croûte/mie plus élevé par rapport au four de référence en ayant une température de préchauffage moins élevée (230°C en four conventionnel contre 200°C en four infra rouge).

Les pains cuits au four infrarouge étaient cependant un peu moins colorés que les pains cuits au four conventionnel : on voit en effet l'évolution du paramètre « delta E » (différence totale de couleur selon le référentiel CIELAB-CIE Pub, 1986. Colorimetry, 2nd Ed. CIE Central Bureau, Vienna.).

Sur la base de ces essais, on peut formuler les conclusions suivantes :
1) Le procédé de cuisson objet de l'invention ("four IR") permet d'obtenir des pains dont les principaux paramètres qualitatifs (cf. Tableaux 1 et 2) peuvent être considérés comme identiques à des pains précuits et cuits dans un four conventionnel.
2) Les paramètres physiques tels que le flux de chaleur reçu par la base du pain et l'évolution des températures de croûte et de mie sont quasiment identiques.
3) L'énergie spécifique consommée par le four selon l'invention est 49% plus faible que pour le four conventionnel lors de la phase de préchauffage, pour un procédé de type pain précuit (680 Wh/kg contre 1340 Wh/kg - cf. tableau 1). La durée de préchauffage, quant à elle, est réduite de 77% (9 minutes contre 40 minutes-cf. tableau 1).
4) L'énergie spécifique pour la phase de cuisson (en condition de type « précuisson ») est réduite de 100% pour le four IR (0 contre 83 - cf. tableau 1). Cela est dû au fait que la puissance était à 0% pendant la phase de cuisson IR grâce à l'énergie stockée dans la sole.
5) L'énergie spécifique pour la phase de réchauffage après une cuisson (en condition de type « précuisson ») est réduite de 33% pour le four IR (140 contre 211- cf. tableau 1).

L'énergie spécifique consommée par le four selon l'invention est 40% plus faible que pour le four conventionnel lors de la phase de préchauffage pour un procédé de type cuisson finale d'un pain précuit (1000 Wh/kg contre 1670 Wh/kg - cf. table 2). La durée de préchauffage est réduite de 76% (12 minutes contre 50 minutes - cf. tableau 2).
6) L'énergie spécifique pour la phase de cuisson (en condition de type cuisson finale d'un pain précuit) est réduite de 59% pour le four selon l'invention (70 contre 170 - cf. tableau 2).
7) L'énergie spécifique pour la phase de réchauffage après une cuisson (en condition de type cuisson finale d'un pain précuit) est augmentée de 29% pour le four selon l'invention (180 contre 140 - cf. tableau 2).
8) Le four de l'invention permet d'atteindre dans certaines conditions, un volume et un rapport de masse croute/mie plus élevé avec une température de préchauffage plus basse en comparaison avec le four conventionnel de référence.

On peut conclure, à partir de ces essais, que le four et le procédé proposé offrent une réduction de la demande d'énergie d'environ 40 à 50% par rapport à une technique de cuisson conventionnelle.

Cette amélioration est à porter au crédit de la rapidité de chauffage par le système à infra rouge, qui limite les pertes avec l'ambiance à travers l'isolant. On rappelle ici que les deux fours utilisés avaient la même base, la même structure et la même isolation thermique.

## Revendications

1. Four de cuisson (1) à usage alimentaire, pour la cuisson d'une pâte à base de céréales, notamment une pâte fermentée, qui comprend une enceinte (10) isolée thermiquement dont la base est constituée d'une sole (2) en matériau réfractaire, et qui renferme des moyens de chauffage (3) de la sole (2) et de ladite enceinte (10), lesdits moyens de chauffage consistant en des moyens émettant de l'énergie majoritairement sous la forme d'un rayonnement électromagnétique dans un domaine de l'infrarouge, **caractérisé en ce que** les moyens de chauffage sont disposés dans la partie supérieure de l'enceinte (10) et orientés en direction de la sole (2), et en ce le four est dépourvu de tout autre moyen de chauffage de ladite sole.

2. Four selon la revendication 1, **caractérisé par le fait que** lesdits moyens de chauffage consistent en des lampes (3).

3. Four selon la revendication 1 ou 2, **caractérisé par le fait qu'**il comprend des moyens de contrôle (4) de puissance desdits moyens de chauffage (3).

4. Four selon la revendication 3, **caractérisé par le fait que** lesdits moyens de contrôle (4) de puissance comprennent au moins un capteur de température (50, 51) placé dans ladite sole (2).

5. Four selon la revendication 4, qui comporte au moins deux capteurs (50, 51), **caractérisé par le fait que** ces capteurs occupent chacun, en considérant l'épaisseur de ladite sole (2), une position différente par rapport à la surface supérieure de celle-ci.

6. Four selon l'une des revendications précédentes, **caractérisé par le fait qu'**il comporte des moyens (4) pour moduler la puissance des moyens de chauffage, tels que des capteurs de température ou des capteur de flux de chaleur.

7. Four selon la revendication 6, **caractérisé par le fait que** lesdits moyens (4) sont aptes à réduire, respectivement à augmenter la puissance de l'ensemble des moyens de chauffage (3).

8. Four selon la revendication 6, **caractérisé par le fait que** lesdits moyens (4) sont aptes, afin de réduire la puissance des moyens de chauffage (3), à provoquer l'allumage/l'extinction alternée d'une première partie de ces moyens (3), en synchronisme avec l'extinction/l'allumage d'une seconde partie de ces moyens (3).

9. Four selon l'une des revendications précédentes, **caractérisé par le fait qu'**à pleine puissance, lesdits moyens de chauffage (3) émettent une radiation de longueur d'onde dans le domaine de l'infrarouge court (0,8 à 2 µm) ou de l'infrarouge moyen (2 à 4 µm).

10. Four selon l'une des revendications précédentes, **caractérisé par le fait que** la sole (2) présente une teinte sombre apte à favoriser l'absorption des rayonnements infrarouges proches de la longueur d'onde du domaine visible (infra rouge court).

11. Four selon l'une des revendications précédentes, **caractérisé par le fait qu'**il comporte des moyens (6) de génération de vapeur (V), et d'injection contrôlée de celle-ci dans ladite enceinte et, éventuellement, de récupération de vapeur non absorbée.

12. Four selon l'une des revendications 1 à 11, **caractérisé par le fait qu'**il est équipé d'un système de mesure de la puissance électrique consommée par chaque lampe (3) individuellement afin de détecter si une lampe présente une anomalie de fonctionnement et doit être remplacée.

13. Four selon l'une des revendications 1 à 12, **caractérisé par le fait que** les connexions électriques desdites lampes (3) se trouvent à l'extérieur de l'enceinte (10).

14. Four selon la revendication 1, **caractérisé par le fait que** lesdits moyens de chauffage consistent en des brûleurs équipés d'une mousse métallique ou de céramique réfractaire, et alimenté par un combustible gazeux tel que du gaz naturel ou du gaz de pétrole liquéfié.

15. Procédé de cuisson d'une pâte alimentaire à base de céréales, notamment d'une pâte fermentée, dans un four (1) qui comprend une enceinte (10) isolée thermiquement, dont la base est constituée d'une sole en matériau réfractaire et qui renferme des moyens de chauffage de la sole (2) et de ladite enceinte, qui consistent en un ensemble de moyens de chauffage, tels que des lampes (3), émettant dans l'infrarouge, disposés dans la partie supérieure de l'enceinte (10) et orientés en direction de la sole (2), à l'exclusion de tout autre moyen de chauffage de ladite sole (2),
**caractérisé par le fait qu'**il consiste à mettre en oeuvre les étapes suivantes :
a/ préchauffer le four (1), à vide, à l'aide desdits moyens de chauffage (3) ;
b/ introduire ladite pâte dans ce four en la faisant reposer sur la sole (2);
c/ réduire ou amener à zéro la puissance desdits moyens de chauffage (3) et poursuivre la cuisson jusqu'à obtention du degré et/ou de la durée de cuisson désiré(s) ;
d) pendant la phase de cuisson, introduire éventuellement une certaine quantité de vapeur d'eau afin de favoriser l'expansion du pain au moment de la cuisson (expansion de la pâte fermentée au four).

16. Procédé selon la revendication 15, **caractérisé par le fait que** l'on mesure la durée de la cuisson désirée, à partir de la mesure d'une sonde de température disposée dans la pâte ou dans la sole (2), ou par un moyen thermométrique mesurant à distance la température de la surface de la pâte en cours de cuisson par rayonnement infrarouge.

17. Procédé selon l'une des revendications 15 ou 16, **caractérisé par le fait que** l'on mesure la durée de préchauffage du four (1) à partir de la mesure d'une sonde de température disposée dans la sole (2), d'un moyen thermométrique communiquant à distance par rayonnement infrarouge et permettant de mesurer la température de la face supérieure ou inférieure de la sole (2) à distance, ou d'un fluxmètre installé dans la sole.

18. Procédé selon l'une des revendications 15 à 17, **caractérisé par le fait que**, à l'étape c/, on réduit la puissance de l'ensemble des moyens de chauffage (3).

19. Procédé selon la revendication 15, **caractérisé par le fait que**, à l'étape c/, on provoque l'allumage/l'extinction alternée d'une première partie des moyens de chauffage (3), en synchronisme avec l'extinction/l'allumage d'une seconde partie des moyens de chauffage (3).

20. Procédé selon l'une des revendications 15 à 19, **caractérisé par le fait que** l'on contrôle la fin de cuisson par des moyens vidéo aptes à apprécier le degré de coloration de la croûte des pâtons, pour agir sur la puissance desdits moyens de chauffage (3) et décider de la fin de cuisson.

21. Procédé selon l'une des revendications 15 à 20, **caractérisé par le fait que** le ratio entre l'énergie restituée par la sole (2) pendant la cuisson et l'énergie demandée pour la cuisson des pâtons, est compris entre 2 et 3 environ.

## Patentansprüche

1. Backofen (1) für Lebensmittel zum Backen eines Teigs auf der Basis von Getreide, insbesondere eines gegorenen Teigs, der einen thermisch isolierten Raum (10) umfasst, dessen Basis von einer Platte (2) aus feuerfestem Material gebildet ist und der Heizmittel (3) der Platte (2) und des Raums (10) einschließt,
wobei die Heizmittel aus Mitteln bestehen, die Energie hauptsächlich in Form einer elektromagnetischen Strahlung in einem Infrarotbereich senden, **dadurch gekennzeichnet, dass** die Heizmittel im oberen Teil des Raums (10) angeordnet sind und in Richtung der Platte (2) ausgerichtet sind und dass der Ofen kein anderes Heizmittel der Platte aufweist.

2. Ofen nach Anspruch 1, **dadurch gekennzeichnet, dass** die Heizmittel aus Lampen (3) bestehen.

3. Ofen nach Anspruch 1 oder 2, **dadurch gekennzeichnet, dass** er Steuermittel (4) der Leistung der Heizmittel (3) umfasst.

4. Ofen nach Anspruch 3, **dadurch gekennzeichnet, dass** die Steuermittel (4) der Leistung mindestens einen Temperatursensor (50, 51) umfassen, der in der Platte (2) platziert ist.

5. Ofen nach Anspruch 4, der mindestens zwei Sensoren (50, 51) aufweist, **dadurch gekennzeichnet, dass** diese Sensoren jeweils unter Berücksichtigung der Stärke der Platte (2) eine Position einnehmen, die sich von der oberen Fläche derselben unterscheidet.

6. Ofen nach einem der vorangehenden Ansprüche, **dadurch gekennzeichnet, dass** er Mittel (4) zum Modulieren der Leistung der Heizmittel wie Temperatursensoren oder Wärmeflusssensoren aufweist.

7. Ofen nach Anspruch 6, **dadurch gekennzeichnet, dass** die Mittel (4) imstande sind, die Leistung der Gesamtheit der Heizmittel (3) zu reduzieren beziehungsweise zu erhöhen.

8. Ofen nach Anspruch 6, **dadurch gekennzeichnet, dass** die Mittel (4) imstande sind, um die Leistung der Heizmittel (3) zu reduzieren, das abwechselnde Einschalten / Ausschalten eines ersten Teils dieser Mittel (3) synchron mit dem Einschalten / Ausschalten eines zweiten Teils dieser Mittel (3) zu bewirken.

9. Ofen nach einem der vorangehenden Ansprüche, **dadurch gekennzeichnet, dass** die Heizmittel (3) bei voller Leistung eine Strahlung mit einer Wellenlänge im kurzen Infrarotbereich (0,8 bis 2 µm) oder im mittleren Infrarotbereich (2 bis 4 µm) senden.

10. Ofen nach einem der vorangehenden Ansprüche, **dadurch gekennzeichnet, dass** die Platte (2) eine dunkle Farbe aufweist, die imstande ist, die Absorption der Infrarotstrahlungen in der Nähe der Wellenlänge des sichtbaren Bereichs (kurzer Infrarotbereich) zu fördern.

11. Ofen nach einem der vorangehenden Ansprüche, **dadurch gekennzeichnet, dass** er Mittel (6) zum Erzeugen von Dampf (V) und zum kontrollierten Einleiten desselben in den Raum und eventuell zum Rückgewinnen nicht absorbierten Dampfes aufweist.

12. Ofen nach einem der Ansprüche 1 bis 11, **dadurch gekennzeichnet, dass** er mit einem Messsystem der von jeder Lampe (3) individuell verbrauchten elektrischen Leistung ausgestattet ist, um festzustellen, wenn eine Lampe eine Funktionsanomalie aufweist und ersetzt werden muss.

13. Ofen nach einem der Ansprüche 1 bis 12, **dadurch gekennzeichnet, dass** sich die elektrischen Anschlüsse der Lampen (3) außerhalb des Raums (10) befinden.

14. Ofen nach Anspruch 1, **dadurch gekennzeichnet, dass** die Heizmittel aus Brennern bestehen, die mit einem metallischen Schaumstoff oder aus feuerfester Keramik ausgestattet sind und mit einem gasförmigen Brennstoff wie Erdgas oder Gas aus verflüssigtem Petroleum versorgt werden.

15. Verfahren zum Backen eines Teigs auf der Basis von Getreide, insbesondere eines gegorenen Teigs, in einem Ofen (1), der einen thermisch isolierten Raum (10) umfasst, dessen Basis von einer Platte aus feuerfestem Material gebildet ist und der Heizmittel der Platte (2) und des Raums einschließt, die aus einer Gruppe von Heizmitteln wie Lampen (3) bestehen, die im Infrarotbereich senden, die im oberen Teil des Raums (10) angeordnet sind und in Richtung der Platte (2) ausgerichtet sind, bei Ausschluss jedes anderen Heizmittels der Platte (2),
**dadurch gekennzeichnet, dass** es darin besteht, die folgenden Schritte umzusetzen:
a/ Vorheizen des leeren Ofens (1) mit Hilfe der Heizmittel (3);
b/ Einbringen des Teigs in diesen Ofen, wobei er auf der Platte (2) ruht;
c/ Reduzieren der Leistung der Heizmittel (3) oder Führen auf null und Fortsetzen des Backens bis zum Erhalt des gewünschten Backgrads und/oder der gewünschten Backdauer;
d) während der Backphase eventuell Einleiten einer bestimmten Menge von Wasserdampf, um das Gehen des Brots im Augenblick des Backens (Gehen des gegorenen Teigs im Ofen) zu fördern.

16. Verfahren nach Anspruch 15, **dadurch gekennzeichnet, dass** die gewünschte Backdauer mit Hilfe der Messung eine Temperatursonde gemessen wird, die im Teig oder in der Platte (2) angeordnet ist, oder mit einem Thermometermittel, das die Temperatur auf der Oberfläche des Teigs während des Backens mittels Infrarotstrahlung aus der Entfernung misst.

17. Verfahren nach einem der Ansprüche 15 oder 16, **dadurch gekennzeichnet, dass** die Vorheizdauer des Ofens (1) auf der Basis der Messung einer Temperatursonde, die in der Platte (2) angeordnet ist, eines Thermometermittels, das mittels Infrarotstrahlung aus der Entfernung kommuniziert und erlaubt, die Temperatur der oberen oder unteren Fläche der Platte (2) aus der Entfernung zu messen, oder eines in der Platte eingebauten Flussmessers gemessen wird.

18. Verfahren nach einem der Ansprüche 15 bis 17, **dadurch gekennzeichnet, dass** in Schritt c/ die Leistung der Gesamtheit der Heizmittel (3) reduziert wird.

19. Verfahren nach Anspruch 15, **dadurch gekennzeichnet, dass** in Schritt c/ das abwechselnde Einschalten / Ausschalten eines ersten Teils der Heizmittel (3) synchron mit dem Einschalten / Ausschalten eines zweiten Teils der Heizmittel (3) erfolgt.

20. Verfahren nach einem der Ansprüche 15 bis 19, **dadurch gekennzeichnet, dass** das Ende des Backens mit Hilfe von Videomitteln kontrolliert wird, die imstande sind, den Grad der Färbung der Kruste der Teiglinge zu beurteilen, um auf die Leistung der Heizmittel (3) einzuwirken und über das Ende des Backens zu beschließen.

21. Verfahren nach einem der Ansprüche 15 bis 20, **dadurch gekennzeichnet, dass** das Verhältnis zwischen der von der Platte (2) während des Backens zurückgegebenen Energie und der für das Backen der Teiglinge geforderten Energie zwischen zirka 2 und 3 inklusive beträgt.

## Claims

1. A baking oven (1) for food use for baking a cereal-based dough, in particular a fermented dough, which comprises a thermally insulated chamber (10) whose base is formed of a floor (2) in refractory material and which contains heating means (3) for heating the floor (2) and said chamber (10),
said heating means being formed of means emitting energy mostly in the form of electromagnetic radiation in an infrared region, **characterized in that** the heating means are arranged in the upper part of the chamber (10) and oriented in the direction of the floor (2); and **in that** the oven is devoid of any other means for heating said floor.

2. The oven according to claim 1, **characterized by** the fact that said heating means are formed of lamps (3).

3. The oven according to claim 1 or 2, **characterized by** the fact that it comprises control means (4) for controlling the power of said heating means (3).

4. The oven according to claim 3, **characterized by** the fact that said power controlling means (4) comprise at least one temperature sensor (50, 51) placed in said floor (2).

5. The oven according to claim 4, which comprises at least two sensors (50, 51) **characterized by** the fact that these sensors, considering the thickness of said floor (2), each occupy a different position relative to the upper surface thereof.

6. The oven according to one of the preceding claims, **characterized by** the fact that it comprises means (4) for modulating the power of the heating means, such as temperature sensors or heat flow sensors.

7. The oven according to claim 6, **characterized by** the fact that said means (4) are capable of reducing and respectively increasing the power of all the heating means (3).

8. The oven according to claim 6, **characterized by** the fact that said means (4), in order to reduce the power of the heating means (3), are capable of causing the alternate switching-on/switching-off of a first part of these means (3) synchronized with the switching-off/switching-on of a second part of these means (3).

9. The oven according to one of the preceding claims, **characterized by** the fact that at full power said heating means (3) emit radiation of wavelength in the short infrared range (0.8 to 2 µm) or mid- infrared (2 to 4 µm).

10. The oven according to one of the preceding claims, **characterized by** the fact that the floor (2) is of dark color capable of promoting absorption of the infrared radiation close to the wavelength of the visible range (short infrared).

11. The oven according to one of the preceding claims, **characterized by** the fact that it comprises means (6) for generating steam (V) and for the controlled injection thereof into said chamber, and optionally for recovering the non-absorbed steam.

12. The oven according to one of claims 1 to 11, **characterized by** the fact that it is equipped with a system for measuring the electric power consumed by each lamp (3) individually, to detect whether a lamp has an operating anomaly and must be replaced.

13. The oven according to one of claims 1 to 12 and 19, **characterized by** the fact that the electric connections of said lamps (3) lie outside the chamber (10).

14. The oven according to claim 1, **characterized by** the fact that said heating means consist of burners equipped with a metal foam or refractory ceramic and supplied with gas fuel such as natural gas or liquid petroleum gas.

15. A method for baking a cereal-based food dough, in particular a fermented dough, in an oven (1) which comprises a thermally insulated chamber (10) whose base is formed of a floor in refractory material and which contains means for heating the floor (2) and said chamber, which consist of a set of heating means such as lamps (3) emitting in the infrared, arranged in the upper part of the chamber (10) and oriented in the direction of the floor (2) to the exclusion of any other means for heating said floor (2),
**characterized by** the fact that it comprises the implementation of the following steps:
a/ pre-heating the, empty oven (1) using said heating means (3);
b/ placing said dough in this oven leaving it to rest on the floor (2);
c/ reducing or zeroing the power of said heating means (3) and continuing baking until the desired degree and/or time of baking are obtained;
d/ during the baking phase, optionally adding a certain amount of steam to promote expansion of the bread during baking (expansion of the fermented dough in the oven).

16. The method according to claim 15, **characterized by** the fact that the desired baking time is measured using the measurement given by a temperature probe arranged in the dough or in the floor (2), or given by thermometric means remotely measuring the temperature of the surface of the dough during baking via infrared radiation.

17. The method according to one of claims 15 or 16, **characterized by** the fact that the pre-heating time of the oven (1) is measured using the measurement given by a temperature probe arranged in the floor (2), by thermometric means remotely communicating via infrared radiation and allowing remote measurement of the temperature of the upper or lower side of the floor (2), or by a flow meter installed in the floor.

18. The method according to one of claims 15 to 17 **characterized by** the fact that at step c/, the power of all the heating means (3) is reduced.

19. The method according to claim 15, **characterized by** the fact that at step c/ alternate switching-on/switching-off is caused of the heating means (3) in synchronization with the switchingoff/switching-on of a second part of the heating means (3).

20. The method according to one of claims 15 to 19, **characterized by** the fact that the completion of baking is controlled by video means capable of assessing the extent of coloring of the crust of the dough pieces, to act on the power of said heating means (3) and decide on completion of baking.

21. The method according to one of claims 15 to 20, **characterized by** the fact that the ratio between the energy returned by the floor (2) during baking and the energy required for baking the dough pieces is between about 2 and 3.
